## Europäisches Patentamt
## European Patent Office
## Office européen des brevets

(11) Numéro de publication: **0 171 635**
**B1**

# (12) FASCICULE DE BREVET EUROPÉEN

(45) Date de publication du fascicule du brevet:
29.06.88

(21) Numéro de dépôt: **85108930.0**

(22) Date de dépôt: **17.07.85**

(51) Int. Cl.⁴: **G 04 C 3/14**

(54) **Procédé et dispositif de reconnaissance de la position du rotor d'un moteur pas à pas.**

(30) Priorité: **27.07.84 CH 3648/84**

(43) Date de publication de la demande:
**19.02.86 Bulletin 86/8**

(45) Mention de la délivrance du brevet:
**29.06.88 Bulletin 88/26**

(84) Etats contractants désignés:
**DE FR GB**

(56) Documents cité:
**EP-A-0 057 663**
**EP-A-0 077 293**
**EP-A-0 085 648**
**DE-A-2 944 872**
**GB-A-2 077 002**

(73) Titulaire: **ASULAB S.A., Faubourg du Lac 6, CH-2501 Bienne (CH)**

(72) Inventeur: **Gête, Henri, Beau- Site 5, CH- 2208 Les Hauts- Geneveys (CH)**

(74) Mandataire: **Gresset, Jean, ICB Ingénieurs Conseils en Brevets SA Passage Max. Meuron 6, CH- 2001 Neuchâtel (CH)**

LIBER, STOCKHOLM 1988

## Description

La présente invention concerne un procédé et un dispositif de reconnaissance de la position angulaire du rotor d'un moteur pas à pas, lorsque le rotor est en position de repos.

Le procédé s'applique aux moteurs comprenant un stator aimanté présentant au moins deux pôles diamétralement opposés et susceptibles d'occuper deux positions de repos stables, un stator formant un circuit magnétique pourvu d'étranglements saturables et une bobine couplée magnétiquement au stator pour y créer un champ magnétique interagissant avec le rotor. De tels moteurs sont bien connus et la largement utilisés, par exemple en horlogerie, pour entraîner les aiguilles par l'intermédiaire d'un train d'engrenage. Suivant la forme des signaux de commande appliqués aux bornes de la bobine, ils sont en outre susceptibles d'être mis en rotation dans un sens ou dans un sens opposé.

La reconnaissance correcte de la position du rotor d'un moteur peut être un facteur essentiel de bon fonctionnement, par exemple d'une montre, si le moteur est du type à deux sens de rotation pour déterminer la polarité de la prochaine impulsion motrice afin que le moteur tourne dans le sens voulu ou, si la montre est pourvue d'un dispositif de rattrapage de pas perdus, pour contrôler si le moteur a effectué ou non le pas précédent.

Un procédé de reconnaissance de la position du rotor connu, utilisable avec ce type de moteurs, consiste à appliquer à la bobine une impulsion électrique de contrôle ayant une amplitude et une polarité données mais une durée insuffisante pour faire tourner le rotor, à mesurer un courant de contrôle créé dans la bobine par cette impulsion durant un court instant à la fin d'un intervalle de temps de contrôle déterminé, compté à partir du début de l'impulsion, puis à comparer le courant de contrôle avec un courant de référence, le signe de cette comparaison étant représentatif de la position angulaire du rotor.

Un moteur pour pièce d'horlogerie ayant les caractéristiques mentionnées, un circuit de commande du moteur et un circuit de reconnaissance de la position du rotor mettant en oeuvre ce procédé ont été décrits en détails par exemple, dans la demande de brevet EP 0 085 648, déposée le 1er juillet 1982 au nom d'ASULAB S.A.

Dans ce procédé, le courant de contrôle est mesuré pendant un bref instant à la fin d'un intervalle de temps de contrôle-fixe, déterminé en fonction des caractéristiques du moteur dont certaines peuvent avoir une forte influence sur cet intervalle de temps. Il suffit alors que les caractéristiques du moteur varient pour que la position du rotor ne soit plus reconnue de façon sûre ou même correcte. Or la constance des caractéristiques ne peuvent être garanties. Elles sont en effet susceptibles de changer par vieillissement, sous l'influence de la température ou à la suite d'une modification de la charge entraînée par le rotor, si celle-ci est, par exemple, un calendrier. De plus, même pour des moteurs d'un type donné, les caractéristiques présentent une certaine dispersion. En production cela pourrait nécessiter l'ajustement de l'intervalle de temps de contrôle à chaque moteur particulier, opération supplémentaire entraînant un coût de production plus élevé. En service après vente, le remplacement du moteur pourrait poser le même problème.

La présente invention a principalement pour but de supprimer cet inconvénient en permettant de déterminer un intervalle de temps de contrôle de façon qu'il corresponde aux caractéristiques particulières du moteur utilisé.

Ce but est atteint grâce au fait que le procédé selon l'invention est particulièrement remarquable en ce qu il consiste à appliquer à la bobine du moteur une première impulsion électrique, à mesurer un premier courant dans la bobine créé par la première impulsion, à déterminer un premier intervalle de temps correspondant à la durée nécessaire au premier courant pour atteindre la valeur du courant de référence, à mémoriser le premier intervalle de temps, à appliquer à la bobine une seconde impulsion électrique de même amplitude que la première impulsion mais de polarité inverse, à mesurer un second courant dans la bobine créé par la seconde impulsion, à déterminer un second intervalle de temps correspondant à la durée nécessaire au second courant pour atteindre la valeur du courant de référence et à déterminer la valeur moyenne du premier et du second intervalle de temps, cette valeur moyenne correpondant à l'intervalle de temps de contrôle.

Dans le procédé selon l'invention, le courant de contrôle est mesuré à la fin d'un intervalle de temps de contrôle optimum, étant déterminé par un processus faisant intervenir le moteur particulier considéré. C'est une garantie pour que la reconnaissance de la position du rotor soit faite dans les meilleures conditions.

Le dispositif de commande qui permet de mettre en oeuvre le procédé selon l'invention comprenant des moyens pour produire une impulsion électrique de contrôle, des moyens pour appliquer cette impulsion électrique de contrôle à la bobine du moteur, des moyens pour mesurer un courant de contrôle, créé dans la bobine par l'impulsion électrique de contrôle, à la fin d'un intervalle de temps de contrôle compté à partir du début de l'impulsion de contrôle, des moyens de mémorisation pour stocker ledit intervalle de temps de contrôle, et des moyens pour comparer le courant de contrôle à un courant de référence et fournir un signal représentatif du signe de la comparaison, ce signal indiquant la position du rotor, est particulièrement remarquable en ce qu'il comporte en outre des moyens pour produire une première impulsion électrique, des moyens pour appliquer la première impulsion électrique à la bobine du moteur, des moyens pour mesurer un premier courant, créé dans la bobine par la première impulsion, des moyens pour déterminer un premier intervalle de temps correspondant à la durée nécessaire au premier courant pour atteindre le courant de référence, des moyens pour produire une seconde impulsion électrique de même amplitude que la première impulsion mais de polarité inverse, des moyens pour appliquer la seconde impulsion à la bobine, des moyens pour mesurer un second courant, créé dans la bobine par la seconde impulsion, des moyens pour déterminer un second intervalle de temps correspondant à la durée nécessaire au second courant pour atteindre le courant de référence, des moyens pour ajouter le second intervalle de temps au premier et des moyens pour calculer la valeur moyenne de ces deux intervalles de temps et transférer cette valeur moyenne dans les moyens de mémorisation, cette valeur constituant l'intervalle de temps de contrôle.

Le procédé et le dispositif selon l'invention sont du type auto-adaptatif, ce qui constitue un avantage important. Ils permettent en effet de déterminer un intervalle de temps de contrôle optimum adapté aux caractéristiques du moteur par un processus d'apprentissage commandé par la première et la seconde impulsion électrique.

D'autre part, comme les caractéristiques d'un moteur ont en général une évolution lente, il n'est pas nécessaire d'utiliser en permanence la partie du dispositif selon l'invention permettant de déterminer l'intervalle de temps moyen, mais seulement un court instant de temps à autre. Ceci permet de rendre négligeable sa consommation en courant.

D'autres propriétés et avantages de la présente invention ressortiront de la description qui va suivre, faite en regard des dessins annexés et donnant, à titre explicatif mais nullement limitatif, un exemple de procédé connu pour la détermination de la position du rotor d'un moteur, un procédé selon l'invention et un dispositif mettant en oeuvre ce procédé. Sur ces dessins:

- la figure 1 est une vue schématique en plan d'un moteur pas à pas connu pouvant tourner dans les deux sens;
- la figure 2 est un diagramme montrant la variation du courant dans la bobine du moteur de la figure 1, créé par une première impulsion électrique et par une seconde impulsion électrique, de polarité inverse, appliquées à la bobine;
- la figure 3 est un circuit connu pour la commande du moteur de la figure 1 dans les deux sens de la rotation qui a été légèrement modifié afin de le rendre compatible avec la présente invention;
- la figure 4 est un diagramme représentant la forme des signaux apparaissant en différents points du circuit de la figure 3;
- la figure 5 est un exemple de circuit de montre pourvue d'un dispositif selon l'invention;
- la figure 5a est un diagramme montrant le principe de la détermination selon l'invention de l'instant de contrôle $t'_0$ du courant dans le moteur;
- la figure 6 est le circuit d'un exemple de dispositif selon l'invention: et
- les figures 7 et 8 sont des diagrammes représentant la forme des signaux apparaissant en différents points des circuits référencés respectivement 230 et 240 sur la figure 6.

Le procédé selon l'invention pour la reconnaissance de la position du rotor d'un moteur est une version améliorée d'un procédé connu, lequel n'est utilisable qu'avec un type de moteur pas à pas bien défini et connu également. Pour mieux faire apparaître les avantages de l'invention, un exemple de moteur et de procédé connus de l'art antérieur vont d'abord être brièvement décrits en se référant à la demande européenne citée.

Pour éviter des confusions dans le texte, les références inférieures à 200 sont celles de la demande citée alors que les références égales ou supérieures à 200 concernent la présente invention.

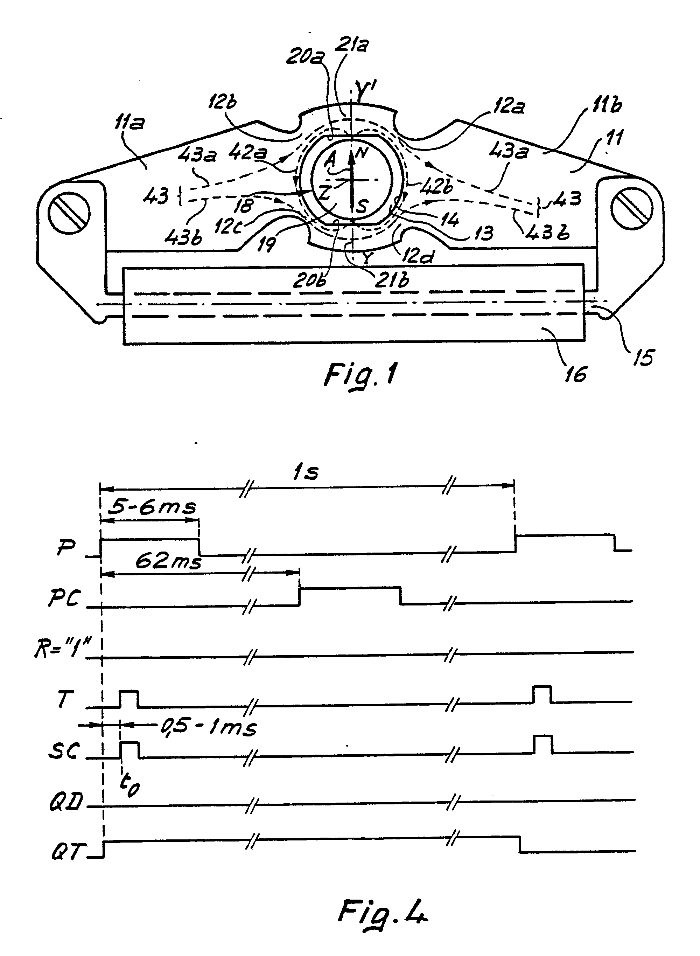

La figure 1 représente un mode de réalisation d'un moteur pas à pas décrit en détail dans la demande précitée ayant la particularité de pouvoir tourner dans un sens en réponse à des impulsions de commande de polarité données, et dans le sens contraire en réponse à des impulsions de commande de polarité inverse.

Ce moteur comporte un stator 11 fixé par des vis au noyau 15 d'une bobine 16 et un rotor 18 muni d'un aimant permanent cylindrique 19, ayant un axe d'aimantation diamétral A, monté en rotation autour d'un axe Z dans un évidement central 13 que présente le stator 11. Cet évidement est délimité par une paroi interne 14 en forme de cylindre de révolution d'axe confondu avec l'axe de rotation Z du rotor 18, sauf en deux zones diamétralement opposées, constituées par des plats 20a et 20b pour assurer au rotor 18 deux positions de repos dans lesquelles l'axe d'aimantation A est dirigé suivant un axe d'équilibre statique YY'.

Le stator est formé de deux parties polaires massives 11a et 11b situées de part et d'autre de l'axe YY'. Elles sont reliées entre elles par une première et une seconde partie intermédiaire 21a et 21b ainsi que par quatre parties de raccordement constituées par des isthmes 12a, 12b, 12c et 12d. Les isthmes 12a et 12c sont disposés symétriquement par rapport à l'axe Z, de même les isthmes 12b et 12d. En outre ils sont situés de façon que les parties 11a et 11b du stator soient reliées ensemble par les isthmes 12a et 12b au travers de la partie intermédiaire 21a et que ces mêmes parties 11a et 11b du stator soient reliées ensemble par les isthmes 12c et 12d au travers de la partie intermédiaire 21b. Enfin les isthmes 12a et 12c ont une largeur minimum 1 et les isthmes 12b et 12d une largeur minimum 1', supérieure 2 à 4 fois à 1.

L'aimant 19 du rotor 18 crée dans le stator 11 un flux magnétique représenté par les lignes d'induction 42a et 42b, symétriques par rapport à l'axe YY'. Dans l'exemple représenté sur la figure 1, les lignes d'induction 42a traversent d'abord l'isthme 12b puis l'isthme 12c, tandis que les lignes d'induction 42b traversent d'abord l'isthme lia puis l'isthme 12d. Si maintenant à un instant initial $t_i$ une impulsion électrique d'amplitude constante est appliquée à la bobine 16, elle va créer dans celle-ci un courant croissant qui produira a son tour un flux magnétique croissant dans le stator. Ce flux, représenté par les lignes d'induction 43, est dirigé, dans le cas de la figure 1, de la partie polaire 11a vers la partie polaire 11b en se séparant en deux flux distincts autour du rotor 18. Le premier flux est représenté par les lignes d'induction 43a. Elles traversent d'abord l'isthme 12b puis l'isthme 12a. De même le second flux est représenté par les lignes d'induction 43b qui traversent d'abord l'isthme 12c puis l'isthme 12d. Il en résulte que les lignes d'induction 42b et 43a dans l'isthme 12a et les lignes d'induction 42a et 43b dans l'isthme 12c sont de même sens, induisant un flux magnétique important dans les isthmes 12a et 12c de faible largeur. De même les lignes d'induction 42a et 43a dans l'isthme 12b et les lignes d'induction 42b et 43b dans l'isthme 12d sont de sens opposés, induisant un flux magnétique faible dans les isthmes 12b et 12d de largeur importante.

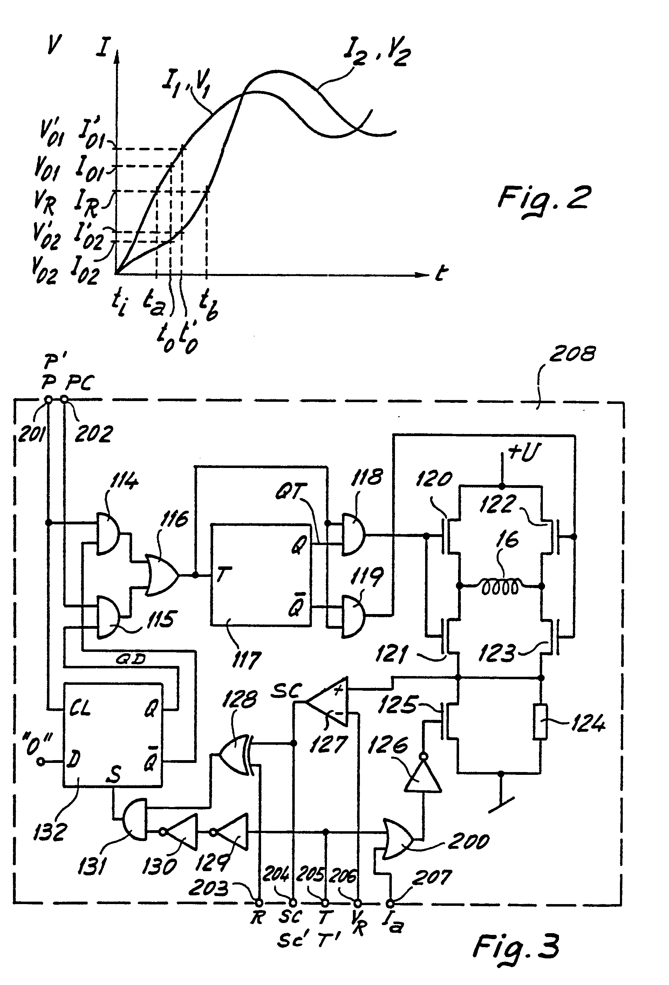

Désignons par $I_1$ le courant dans la bobine 16 qui provoque la distribution des flux dans les isthmes qui vient d'être décrite. En fonction du temps, comme cela est montré sur la figure 2, à partir de l'instant initial $t_i$ correspondant au début de l'impulsion électrique appliquée à la bobine 16, ce courant augmente d'abord exponentiellement. Ensuite sa croissance devient plus rapide à mesure que les isthmes 12a et 12c se saturent. Enfin, lorsque le rotor commence à tourner, la tension induite dans la bobine 16 provoque un ralentissement de la croissance du courant, puis sa diminution. L'évolution du courant pendant la rotation est sans intérêt dans le cas présent.

Supposons maintenant qu'à l'instant initial $t_i$ une impulsion électrique, de même amplitude mais de polarité inverse de celle qui a créé le courant $I_1$, soit appliquée à la bobine 16. Cette impulsion va induire un flux magnétique croissant dans le stator 11 dont les lignes d'induction seront dirigées dans le sens opposé à celui des lignes d'induction 43. Le même raisonnement que celui qui vient d'être fait montrerait que le flux magnétique créé par le rotor 18 et l'impulsion électrique de polarité inverse vont se soustraire dans les isthmes de faible largeur 12a et 12c et s'additionner dans les isthmes de largeur importante 12b et 12d.

Soit $I_2$ le courant créé dans la bobine 16 par cette dernière impulsion électrique. Ce courant commence par croître exponentiellement à partir de l'instant initial $t_i$ pendant un temps plus long que le courant $I_1$, comme cela est montré sur la figure 2. Ensuite cette croissance s'accélère à mesure que l'une des paires d'isthmes 12a, 12c ou 12b, 12d se sature. Le début de la saturation due au courant $I_2$ intervient plus tard que le début de la saturation due au courant $I_1$, car les flux magnétiques dans les isthmes de faible largeur 12a et 12c s'opposent dans le premier cas tandis qu'ils s'ajoutent dans le second. Il s'ensuit que le courant $I_2$ a une valeur plus faible que le courant $I_1$ à peu près jusqu'au moment où le moteur commence à tourner, dans un sens ou dans le sens opposé, suivant que cette rotation est provoquée par le courant $I_1$ ou par le courant $I_2$.

Etant donné la structure symétrique du moteur, il est facile de voir que si le rotor 18 occupait l'autre position d'équilibre, pour les mêmes impulsions électriques appliquées à la bobine 16, les courants $I_1$ et $I_2$ seraient inversés.

De ce qui précède il en résulte que la mesure de la valeur d'un courant de contrôle dans la bobine 16 à la fin d'un intervalle de temps de contrôle $t_0$-$t_i$, soit à un instant de contrôle $t_0$ convenablement choisi alors que le rotor est encore immobile, courant produite par une impulsion électrique de contrôle appliquée à la bobine, permet de déterminer la position du rotor 18 et le sens dans lequel il aura tendance à tourner. Ainsi sur le figure 2, à l'instant de contrôle $t_0$, le courant $I_1$ a une valeur $I_{01}$ et le courant $I_2$ une valeur $I_{02}$, inférieure à $I_{01}$. La comparaison des courants $I_{01}$ et $I_{02}$ entre eux définit la position du rotor et le sens dans lequel il va tourner en réponse à une impulsion électrique donnée. Cette comparaison peut aussi être faite entre l'un des courants $I_{01}$ ou $I_{02}$ et un courant de référence $I_R$ ayant une valeur intermédiaire entre $I_{01}$ et $I_{02}$. Bien entendu seul le signe des comparaisons entre les courants est significatif et non la valeur absolue des courants obtenus.

Une forme possible de réalisation d'un dispositif de commande destiné à être associé à un moteur du type à deux sens de rotation qui vient d'être décrit, est représenté sur la figure 3. Ce dispositif est un circuit de commande référencé 208, capable de fournir à la bobine du moteur des impulsions électriques motrices de polarité correspondant à la position initiale du rotor et au sens de rotation choisi.

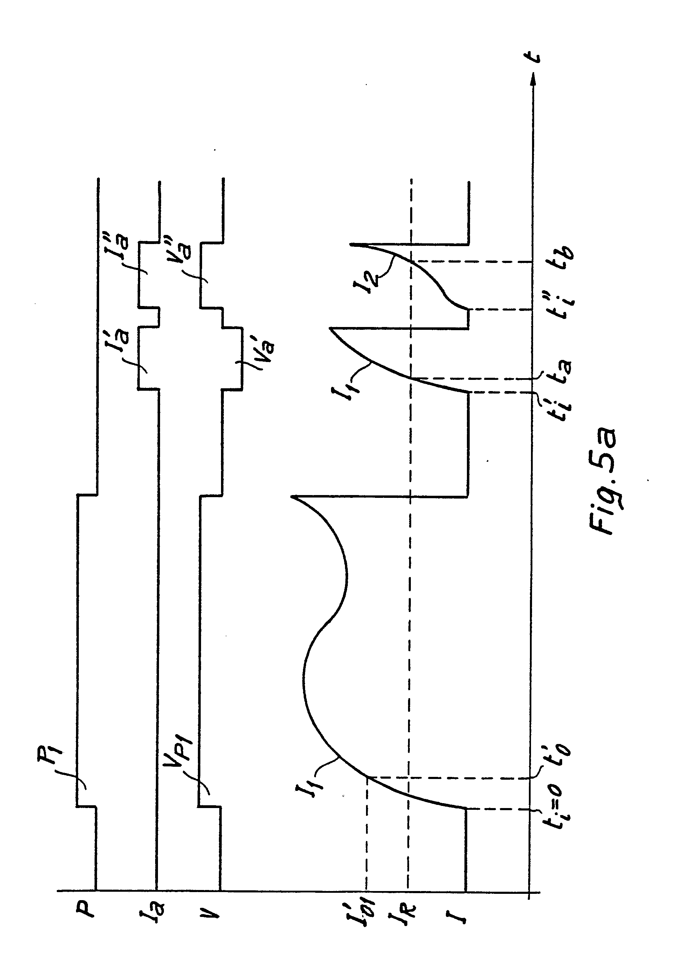

Ce circuit de commande comprend 7 bornes référencées 201 à 207, la bobine 16 déjà citée, des composants référencés 114 à 132 et une porte OU 200 à deux entrées. Seule la porte OU 200 est particulière à une forme d'exécution de la présente invention, le reste du circuit et les références sont identiques au circuit représenté sur la figure 10 de la demande européenne citée et dans laquelle son fonctionnement est expliqué en détail.

C'est pourquoi dans la présente demande cette partie du circuit ne sera décrite que sommairement.

Le circuit de commande 208 de la figure 3 comprend une borne 201, reliée à l'une des deux entrées d'une porte ET 114, et une borne 202, reliée à l'une des deux entrées d'une porte ET 115. Les sorties de ces deux portes sont connectées aux deux entrées d'une porte OU 116 dont la sortie attaque l'entrée T d'une bascule 117 qui change d'état chaque fois que l'entrée passe de l'état logique bas ou "0" à l'état logique haut ou "1". La bascule 117 a deux sorties Q et $\bar{Q}$. La sortie Q est reliée à l'une des deux entrées d'une porte ET 118 et la sortie $\bar{Q}$ à l'une des deux entrées d'une porte ET 119, les autres entrées de ces deux portes étant connectées à la sortie de la porte OU 116. La bobine 16 du moteur est branchée de manière classique dans un pont de quatre transistors de commande MOS 120 à 123. Les transistors 120 et 121, respectivement du type p et n, ont leurs électrodes de commande reliées à la sortie de la porte ET 118, tandis que celles des transistors 122 et 123, respectivement de type p et n, sont connectées à la sortie de la porte ET 119.

Les sources des transistors 120 et 122 sont reliées au pôle positif + U d'une source de tension d'alimentation non représentée, alors qu'entre les sources des transistors 121 et 123 et un point de masse se trouve une résistance 124 aux bornes de laquelle est branché un transistor 125 de type n. Le courant traversant la bobine 16 peut ainsi être mesuré par la chute de tension qu'il provoque aux bornes de la résistance 124. Aux courants $I_1$, $I_2$, $I'_{01}$, $I_{01}$, $I'_{02}$, $I_{02}$ de la figure 2 correspondant ainsi respectivement des tensions $V_1$, $V_2$, $V'_{01}$, $V_{01}$, $V'_{02}$, $V_{02}$. En dehors des mesures du courant, cette résistance peut être court-circuitée par le transistor 125, dont l'électrode de commande est reliée à la sortie d'un inverseur 126. Les sources des transistors 121 et 123 sont en outre reliées à l'entrée non inverseuse d'un amplificateur différentiel 127 utilisé en comparateur, l'entrée inverseuse de cet amplificateur étant reliée, de son côté, à une borne 206 du circuit 208. Une entrée d'une porte OU EXCLUSIF 128 à deux entrées est reliée à la sortie de l'amplificateur différentiel 127, connectée également à une borne 204 du circuit 208, alors que l'autre entrée est reliée à une borne 203 du même circuit. La sortie de la porte 128 est reliée à une entrée d'une porte ET 131 à deux entrées, l'autre entrée de cette porte étant connectée à la sortie d'un inverseur 130. L'entrée de l'inverseur 130 est reliée à la sortie d'un inverseur 129 dont l'entrée est connectée à une borne 205 du circuit 208. Les inverseurs 129 et 130 ont pour but de créer un retard sur le signal qui les traverse afin d'éviter des chevauchements dans la porte ET 131 avec le signal de sortie de la porte OU EXCLUSIF 128. La sortie de la porte 131 est reliée à l'entrée S de mise à l'état d'une bascule du type à retard 132. L'entrée d'horloge CL de la bascule 132 est reliée à la borne 201, son entrée D est maintenue en permanence à un niveau logique bas ou 0, tandis que ses sorties Q et $\bar{Q}$ sont connectées respectivement aux deux autres entrées des portes ET 115 et 114. Enfin une porte OU 200 à deux entrées, propre à la présente invention, a une entrée reliée à la borne 205 et l'autre entrée à une borne 207 du circuit 208, alors que la sortie de cette porte est connectée à l'entrée de l'inverseur 126.

Les bornes 201, 202, 203, 205, 206 et 207 du circuit 208 de ta figure 3 reçoivent respectivement les signaux P, PC, R, T, $V_R$ et $I_a$.

Le signal $I_a$ sera considéré pour le moment comme étant en permanence au niveau logique bas. Dans ces conditions la pote OU 200 n'a pas d'autre fonction que de relier la borne 205 à l'entrée de l'inverseur 126. Le signal $V_R$ est une tension de référence correspondant au courant de référence $I_R$. L'instant de contrôle $t_0$ du courant dans la bobine 16 et la durée de mesure de ce courant sont définis par un signal de contrôle T formé d'une suite de brèves impulsions. Le sens de rotation du moteur dépend de l'état du signal logique R. On supposera que ce signal se trouve au niveau logique haut, auquel correspond, par exemple, une rotation en avant. Le moteur est mis en rotation par des impulsions de commande normales P de durée indéterminée, de l'ordre de 5 à 6 ms, ou des impulsions de commande de correction PC de même durée que les impulsions P mais retardées par rapport à celles-ci, par exemple de 62 ms.

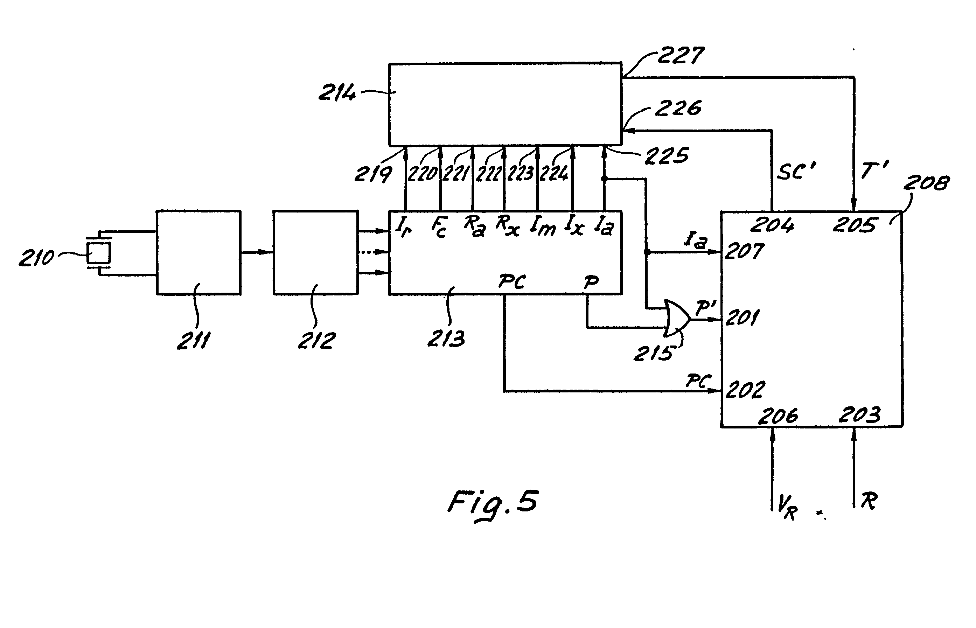

Les signaux P, PC et T ont une périodicité de 1 seconde et sont élaborés de façon connue par un circuit logique non représenté à partir d'un signal de référence haute fréquence. Ces signaux sont représentés sur la figure 4, identique à la figure 11a de la demande européenne citée, où l'on distingue également les signaux QT, QD et, le signal de comparaison SC mesurés respectivement à la sortie Q de la bascule 117, à la sortie Q de la bascule 132 et à la sortie de amplificateur différentiel 127.

Le fonctionnement du circuit de commande de la, figure 3 va maintenant être expliqué. On admettra qu'à un instant se situant juste avant le début de l'impulsion de commande normale P, les sorties Q des bascules 117 et 132 sont au niveau logique bas ou "0" et que le signal R est au niveau logique haut ou "1", correspondant à une marche en avant du moteur. Dans ces conditions les sorties de troutes les portes ET du circuit 208 sont à l'état logique bas. Il en résulte que les transistors 120 et 122 sont conducteurs ou saturés et les transistors 121 et 123 bloqués, court-circuitant la bobine 16. On supposera également que le signal de contrôle T se trouve au niveau logique bas, ce qui rend le transistor 125 conducteur grâce à l'inverseur 126. La sortie SC de l'amplificateur 127 se trouve alors aussi au niveau logique bas. Lorsqu'une impulsion de commande normale P est appliquée sur la borne 201, elle atteint une entrée de la porte ET 114. L'autre entrée de cette porte, reliée à la sortie $\bar{Q}$ de la bascule 132, se trouvant au niveau logique haut, l'impulsion P traverse les portes ET 114 et OU 116 pour atteindre l'entrée T de la bascule 117. En réponse à l'impulsion P, la sortie Q de cette bascule passe de l'état logique bas à l'état logique haut. La porte ET 118 devient alors à son tour passante tandis que la porte ET 119 reste bloquée du fait que l'état de ses entrées a seulement été inversé. Le transistor 120 devient bloqué tandis que le transistor 121 devient conducteur. Un courant commence alors de circuler dans la bobine 16 allant du transistor 122 au transistor 121, la résistance de mesure 124 étant court-circuitée par le transistor 125. L'état des sorties des autres éléments, y compris la bascule 132, demeure inchangé.

Le courant de contrôle est mesuré dans la bobine 16 à l'instant $t_o$ à l'aide du signal de contrôle T. Ce signal, appliqué sur la borne 205 du circuit 208, contient des impulsions de contrôle d'une durée de 15 à 60 µs qui apparaissent à l'instant de contrôle $t_o$, compté à partir du début de l'impulsion P correspondant à l'instant initial $t_i$. La valeur de $t_o$-$t_i$ est fixe et vaut entre 0.5 et 1 ms suivant les caractéristiques du moteur. Les impulsions de contrôle, passant à travers la porte OU 200 et l'inverseur 126, viennent bloquer un court instant le transistor 125. Le courant de contrôle dans la bobine 16 est alors contraint de passer momentanément dans la résistance de mesure 124 aux bornes de laquelle apparaît une tension proportionnelle à ce courant. Deux cas peuvent alors se présenter.

Dans le premier cas on suppose que la tension aux bornes de la résistance 124, désignée par $V_{01}$ sur la figure 2, est supérieure à la tension de référence $V_R$. Cela signifie que le rotor s'apprête à tourner en avant. Un état logique haut apparaît alors sur le signal SC à la sortie de l'amplificateur 127. Ce signal a pour effet de faire passer la sortie de la porte OU EXCLUSIF 128 de l'état logique haut à l'état logique bas et de bloquer la porte ET 131. Cette dernière porte ne peut alors plus transmettre le signal T, qui lui est appliqué à l'entrée au travers des inverseurs 129 et 130, jusqu'à l'entrée de mise à l'état S de la bascule 132. Cette bascule garde donc son état logique initial dans lequel la sortie Q se trouve au niveau logique bas. L'impulsion de commande normale P est dans ces conditions transmise aux transistors de commande 120 à 123 de la bobine 16, faisant avancer le moteur d'un pas. L'impulsion de commande de correction PC, apparaissant 62 ms plus tard sur la borne 202, est par contre bloquée par la porte ET 115. Par ailleurs, après l'application de l'impulsion motrice normale P, tous les éléments ont retrouvé leur état logique initial à l'exception de la bascule 117 dont la sortie Q se trouve maintenant à l'état logique haut.

Le second cas correspond à celui où la tension aux bornes de la résistance 124, désignée par $V_{02}$, est inférieure à $V_R$. Ceci peut se présenter si le moteur a fait un pas accidentel à la suite, par exemple, d'un choc angulaire durant la seconde précédente. Une impulsion motrice normale P ferait alors tourner le moteur en arrière. Cette situation est toutefois évitée car le signal de comparaison SC à la sortie de l'amplificateur 127 reste alors au niveau logique bas, ce qui fait que la sortie de la porte OU EXCLUSIF 128 se maintient au niveau logique haut. Dans ces conditions, la porte ET 131 transmet l'impulsion T à l'entrée de mise à l'état S de la bascule 132, mettant la sortie Q de cette bascule au niveau logique haut et la sortie Q̄ au niveau logique bas. Ceci a pour effet de bloquer la porte ET 114 et donc d'arrêter la transmission de l'impulsion de commande normale P au moteur, qui n'effectue pas de rotation dans le mauvais sens. Par contre la porte ET 115 est rendue passante pour l'impulsion de commande de correction PC, produite 62 ms plus tard. Cette impulsion traversant la porte OU 116 fait changer d'état la bascule 117, ce qui a pour conséquence de rendre la porte ET 119 passante et de bloquer la porte ET 118. Les transistors 121 et 122 étant alors bloqués et les transistors 120 et 123 conducteurs, la bobine 16 reçoit une impulsion motrice de correction de polarité opposée à celle de l'impulsion motrice de correction qui avait commencé à lui être appliquée sous l'effet de l'impulsion de commande normale P. L'arrivée de l'impulsion de commande normale suivante sur l'entrée de la bascule 117 changera l'état de celle-ci en mettant la sortie Q au niveau logique haut et la sortie Q̄ au niveau logique bas. Le moteur recevra alors une impulsion motrice normale de polarité inverse de celle de l'impulsion motrice de correction précédente, faisant faire au moteur un pas en avant.

Le même processus va se reproduire pour chaque impulsion de commande normale du moteur et, chaque fois que le rotor ne se trouvera pas dans la position correcte pour tourner dans le sens voulu, l'impulsion sera arrêtée et c'est l'impulsion motrice de correction suivante qui entraînera le moteur dans le sens désiré. L'ordre de succession des polarités des impulsions motrices normales qu'il recevra par la suite sera ainsi l'inverse de celui des impulsions qu'il recevait auparavant, en supposant naturellement que le niveau logique du signal R commandant le sens de rotation demeure inchangé.

Le fonctionnement du circuit de commande est tout à fait analogue lorsque le moteur doit tourner dans le sens anti-horaire, en réponse à un niveau logique bas du signal R. Cela est expliqué dans la demande européenne citée mais, n'étant pas indispensable à la compréhension de l'invention, aucun détail sur le comportement du circuit dans ce cas ne sera donné dans la présente demande.

La figure 5 donne un exemple de circuit d'une montre analogique pourvue d'un dispositif mettant en oeuvre le procédé selon l'invention de reconnaissance de la position du rotor du moteur pas à pas de la montre. Ce circuit comprend un résonateur à quartz 210 connecté à un circuit d'entretien 211, l'ensemble formant un oscillateur. Cet oscillateur délivre un signal horaire de référence, ayant une fréquence très stable, typiquement de 32 768 Hz, lequel est appliqué à l'entrée d'un diviseur de fréquence 212. Un circuit logique 213 reçoit sur son entrée multiple les signaux de différentes fréquences, généralement binaires, issus du diviseur de fréquence pour former des signaux logiques nécessaires à la commande des autres circuits de la montre. Ces signaux logiques, désignés par $I_r$, $F_c$, $R_a$, $R_x$, $I_m$, $I_x$ et $I_a$, sont appliqués respectivement sur les entrées 219 à 225 d'un circuit auto-adaptatif 214. Le circuit de la figure 5 comprend également un circuit de commande du moteur pas à pas identique au circuit 208 de la figure 3 qui vient d'être décrit. La borne 201 de ce circuit, sur laquelle apparaît un signal P', est reliée à la sortie d'une porte OU 215 à deux entrées. Une entrée de cette porte reçoit le signal $I_a$ et l'autre entrée le signal P, produit par le circuit 213, identique à l'impulsion de commande normale P déjà mentionnée et représentée sur la figure 3. De même la borne 202 reçoit un signal PC, produit par le circuit 213, ce signal étant identique à l'impulsion de commande de correction PC déjà décrite et représentée sur la figure 4. Les entrées 203 et 206 reçoivent respectivement les signaux R et $V_R$ déjà décrits. La borne de sortie 204 du circuit 208, sur laquelle apparaît un signal de comparaison SC' en réponse au signal P', est reliée à une borne d'entrée 226 du circuit 214. Ce dernier circuit délivre enfin, sur la borne 227, un signal de contrôle T' qui est appliqué sur la borne 205 du circuit 208.

Le résonateur à quartz 210, le circuit d'entretien 211 et le diviseur de fréquence 212 sont des éléments connus et ne seront pas décrits dans cette demande, pas plus que la structure du circuit logique 213 qui est à la portée de l'homme du métier.

Il y a lieu de remarquer que, de façon évidente, le circuit de la figure 5 se comporte comme le circuit de la figure 10 de la demande européenne citée lorsque le signal $I_a$ est constamment au niveau logique bas et que sur la borne 205 est appliqué le signal de contrôle T.

Le principe de fonctionnement du circuit de la figure 5, lorsque le procédé selon l'invention est mis en oeuvre, sera maintenant décrit. Dans ce cas le circuit auto-adaptatif 214 élabore le signal de contrôle T'. Ce signal contient une impulsion de contrôle apparaissant $t'_o$-$t_i$ secondes après le début de chaque impulsion normale P (voir fig. 2). Si le signal $I_a$ est constamment au niveau logique bas, il est encore évident que le circuit de la figure 5 se comportera comme le circuit de la figure 10 de la demande europénne citée, à l'exception que l'instant $t_o$ sera remplacé par l'instant $t'_o$.

Selon l'invention, l'instant $t'_o$, contrairement à l'instant $t_o$ fixe, est variable et périodiquement adapté aux caractéristiques du moteur et à la charge qu'il entraîne. Cette adaptation est réalisée à l'aide du signal $I_a$ contenant des impulsions d'apprentissage. Etant donné que l'évolution des caractéristiques du moteur est lente, il y a intérêt à choisir l'intervalle de temps entre deux impulsions grand, par exemple 64 secondes ou plus, pour diminuer la consommation du circuit.

En réponse au signal $I_a$, le circuit 214 détermine l'instant $t'_o$ et l'intervalle de temps $t'_o$-$t_i$, lequel est mis en mémoire et périodiquement réajusté.

Avant de décrire le circuit auto-adaptatif 214, le principe de la détermination selon l'invention de l'instant de contrôle $t'_o$ sera d'abord expliqué à l'aide du diagramme de la figure 5a.

Sur ce diagramme apparaissent les signaux P et $I_a$. Le signal P contient une impulsion motrice $P_1$ et le signal $I_a$ deux impulsions d'apprentissage $I'_a$ et $I''_a$ se suivant de près et situées en dehors de l'impulsion $P_1$. Le début de l'impulsion $P_1$ définit l'instant initial $t_i$ qui est pris comme origine des temps. Le début des impulsions $I'_a$ et $I''_a$ définissent, de leur côté, respectivement les instants $t'_i$ et $t''_i$.

Les signaux P et $I_a$, appliqués sur l'entrée 201 du circuit 208, sont transformés par les transistors de commande 120 à 123 en un signal V formé d'impulsions de tension $V_{P1}$, $V'_a$ et $V''_a$ appliquées aux bornes de la bobine 16 du moteur. L'impulsion $V_{P1}$ correspond à une impulsion motrice normale, tandis que les impulsions $V'_a$ et $V''_a$ correspondent à une première et à une seconde impulsion d'apprentissage. Si $V_{P1}$ est une impulsion positive, $V'_a$ sera une impulsion négative et $V''_a$ de nouveau une impulsion positive. En réponse au signal V apparaît un signal I représentant le courant dans la bobine 16. Durant l'impulsion motrice $V_{P1}$, ce courant sera identique au courant $I_1$ de la figure 2 si le moteur effectue un pas dans le sens direct. L'impulsion $V'_a$, de polarité inverse à $V_{P1}$, crée dans la bobine un courant également identique au courant $I_1$ puisque le moteur a tourné durant l'impulsion précédente. La durée de l'impulsion $V'_a$ est choisie suffisamment longue pour que le courant puisse atteindre le courant de référence $I_R$ à un instant $t_a$, mais pas assez pour permettre au moteur d'effectuer un pas. Enfin l'impulsion $V''_a$, de polarité inverse à l'impulsion $V'_a$, provoque dans la bobine un courant identique au courant $I_2$ de la figure 2, puisque le moteur n'a pas tourné durant l'impulsion $V'_a$. La durée de l'impulsion $V''_a$ est égale à celle de $V'_a$, c'est-à-dire suffisante pour que le courant atteigne à un instant $t_b$ le courant de référence $I_R$, mais trop courte pour entrîner le moteur à tourner dans le sens inverse.

Il y a lieu de remarquer que dans le cas de la figure 5a l'impulsion $V'_a$ étant négative, le courant qu'elle crée dans la bobine 16 est de signe opposé aux courants crées par les impulsions $V_{P1}$ et $V''_a$. Pour simplifier le dessin, tous les courant ont cepenolant été représentés avec le même signe. Ceci résulte aussi du fait que la mesure de ces courants dans le circuit de la figure 3 est obtenue par la mesure des tensions toujours positives qu'ils créent aux bornes de la résistance 124.

La première impulsion d'apprentissage $V'_a$ permet de déterminer un premier intervalle de temps $t_a$-$t'_i$ et la seconde impulsion un second intervalle de temps $t_b$-$t''_i$. En calculant la valeur moyenne de ces deux intervalles de temps et en l'égalant à l'intervalle de temps $t'_o$-$t_i$, la valeur du courant de contrôle $I'_{01}$ à l'instant $t'_o$ ainsi défini

sera supérieure au courant de référence $I_R$.

De même, il est évident que si $V_{P1}$ était négatif, $V'_a$ positif et $V''_a$ négatif, alors dans le signal I de la figure 5a les courants $I_1$ et $I_2$ devraient être permutés. Ceci ne changerait pas l'intervalle de temps moyen ni $t'_0$, mais le courant de contrôle à cet instant vaudrait alors $I'_{02}$ et serait inférieur à $I_R$.

Le courant de référence $I_R$ se trouvera donc toujours entre $I'_{01}$ et $I'_{02}$ si l'intervalle de temps $t'_0$-ti est déterminé comme il vient d'être expliqué. C'est le but recherché par l'invention car cette condition est nécessaire pour reconnaître de façon sûre la position du rotor d'un moteur.

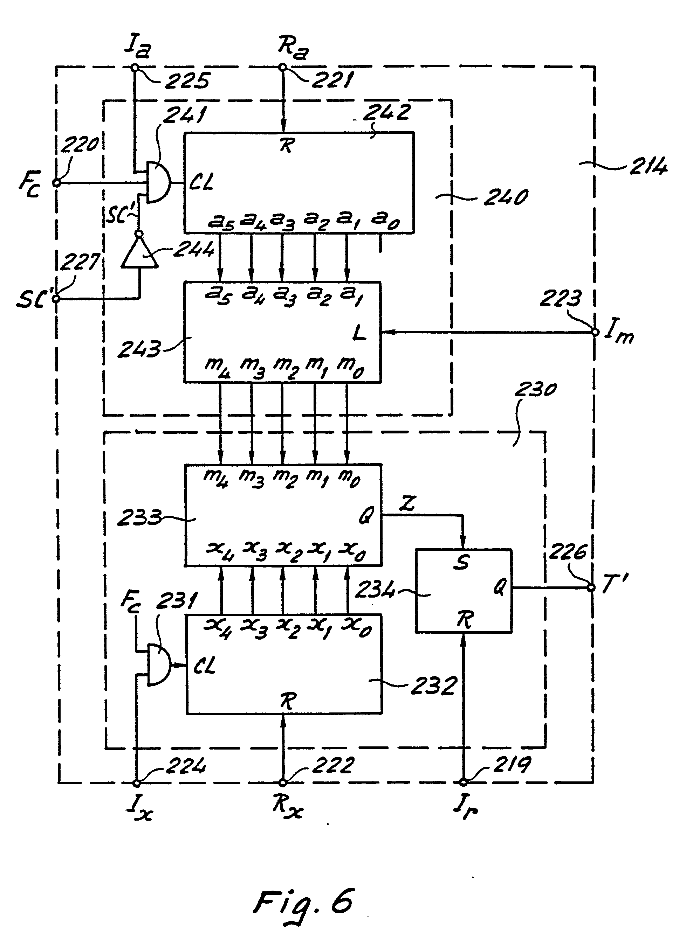

Le circuit auto-adaptatif 214, représenté en détail sur la figure 6, sera maintenant décrit. Il peut être décomposé en un circuit de comparaison 230 et un circuit d'apprentissage 240.

Le circuit de comparaison 230 comprend une porte ET 231 à deux entrées. Une entrée de cette porte est reliée à la borne 220 du circuit 214 pour recevoir le signal $F_c$ et l'autre entrée est connectée à la borne 224 pour recevoir le signal $I_x$. La sortie de la porte ET 231 est reliée à l'entrée de comptage CL d'un compteur binaire 232. Ce compteur a une entrée de remise à zéro R qui est reliée à la borne 222 pour recevoir le signal $R_x$, et une sortie multiple $x_i$ (i = 0 à 4 par exemple) dont l'état logique détermine un nombre binaire $X = x_4 x_3 x_2 x_1 x_0$. La sortie multiple $x_i$ est reliée à une entrée multiple de même nom $x_i$ (i = 0 à 4) d'un comparateur 233 qui reçoit sur une autre entrée multiple $m_j$ (j = 0 à 4) un signal dont l'état logique détermine un nombre binaire $M = m_4 m_3 m_2 m_1 m_0$. Ce compteur délivre sur sa sortie Q un signal Z dont l'état logique dépend de la différence X - M. Si X - M est un nombre négatif, le signal Z prend un niveau logique bas, tandis que si cette différence donne un nombre nul ou positif, Z prend un niveau logique haut. Le signal Z est enfin appliqué sur l'entrée de mise à l'état S d'une bascule bistable RS 234. L'entrée de remise à zéro R de cette bascule est reliée à la borne 219 pour recevoir le signal $I_r$, tandis que la sortie Q, sur laquelle apparaît le signal T', est reliée à la borne 226.

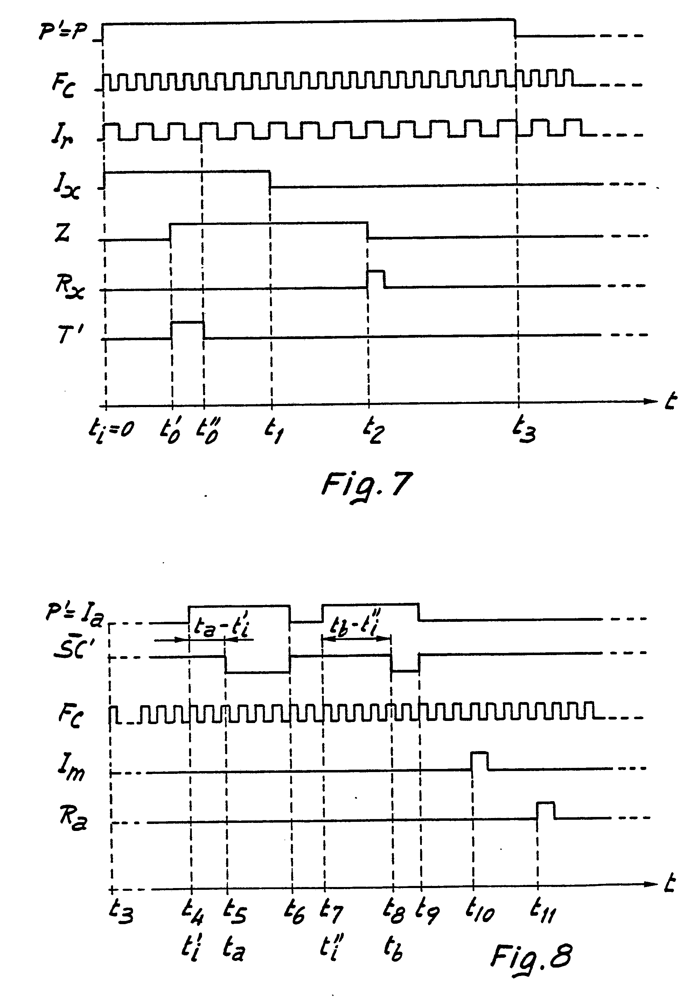

Le fonctionnement du circuit de comparaison 230 de la figure 6 sera maintenant décrit à l'aide du diagramme de la figure 7. Ce circuit est actif seulement durant une partie du temps que dure une impulsion motrice normale P, alors que le signal $I_a$ est supposé être au niveau logique bas. Le signal P' est alors identique au signal P. La figure 7 représente pendant ce temps les signaux P, $F_c$, $I_r$, $I_x$, Z, $R_x$ et T' dont la périodicité est de une seconde, à l'exception des signaux de fréquence élevée $F_c$ et $I_r$. Sur ce diagramme l'instant initial $t_i$ = 0, défini par le flanc montant de l'impulsion du signal P, est pris comme origine de l'axe des temps t.

Le signal $I_x$ passe à l'instant initial de l'état logique bas à l'état logique haut jusqu'à un instant $t_1$. L'instant $t_1$ n'est pas critique, pourvu que l'intervalle de temps $t_1$-$t_i$ soit suffisamment long.

L'impulsion du signal $I_x$ ouvre la porte ET 231, permettant au signal $F_c$ d'atteindre l'entrée CL du compteur 232 supposé être remis à zéro au cycle précédent. Le signal $F_c$ a une fréquence élevée. Il est formé d'impulsions et leur comptage commence dès l'instant initial. Le nombre X d'impulsions comptées est transféré sur une entrée du comparateur 233, l'autre entrée de ce comparateur recevant un nombre M donné. Quand X devient égal à M, le signal Z à la sortie du comparateur passe de l'état logique bas à l'état logique haut et cette transition détermine l'instant de contrôle $t'_0$. Cet instant sera d'autant mieux défini que la fréquence du signal $F_c$ sera élevée. En prenant pour $F_c$ le signal de l'oscillateur de 32 768 Hz, $t'_0$ sera déterminé à 30 µs près, ce qui peut être considéré comme suffisant étant donné que $t'_0$ se situe entre 500 et 1000 µs. En supposant que le signal T' à la sortie de la bascule bistable 234 se trouve au niveau logique bas, le flanc montant du signal Z appliqué sur l'entrée S à l'instant $t'_0$, fera passer le signal T' à l'état logique haut. Le signal T' restera dans cet état jusqu'à un instant $t''_0$ où la bascule sera remise a zéro par le premier flanc montant du signal $I_r$ appliqué sur son entrée R. Le signal $I_r$ est formé d'impulsions et sa fréquence détermine l'intervalle de temps $t''_0$-$t'_0$. Si, par exemple, la fréquence du signal $I_r$ est égale à la moitié de celle de l'oscillateur, cet intervalle de temps vaudra 30 ou 60 µs suivant le flanc du signal $F_c$ qui a déclenché la transition du signal Z. La durée de l'impulsion T' n'étant pas critique, cette imprécision n'est pas gênante. Le bon fonctionnement du circuit 230 exige que l'instant $t''_0$ se trouve, en toute circonstance, avant l'instant $t_1$ où s'arrête le comptage des impulsions du signal $F_c$ par le compteur 232, le signal $I_x$ passant alors au niveau logique bas. En supposant que la capacité maximum du compteur n'a pas été dépassée, le nombre $X_1$ à l'instant $t_1$ sera supérieur au nombre M et, par conséquent, le signal Z continuera à se maintenir au niveau logique haut. Cette situation se prolongera jusqu'à un instant $t_2$, peu critique et postérieur à $t_1$, où une impulsion du signal $R_x$ appliquée sur l'entrée R du compteur 232, en le remettant à zéro, fera passer la sortie du comparateur 233 et le signal Z au niveau logique bas. L'impulsion du signal P se termine à un instant $t_3$, postérieur à $t_2$, sans influencer le circuit de comparaison 230 qui reste dans le même état jusqu'à la prochaine impulsion de ce signal.

Il ressort clairement de ce qui vient d'être dit que l'intervalle de temps $t'_0$-$t_i$ est proportionnel au nombre M que le compteur 232 doit atteindre par le comptage des impulsions du signal $F_c$. Le circuit d'apprentissage 240 représenté sur la figure 6, mettant en oeuvre le procédé selon l'invention, permet d'adapter périodiquement le nombre M aux caractéristiques lentement variables du moteur. Ce circuit comprend une porte ET 241 à trois entrées. La première entrée est reliée à la borne 225 du circuit 214 pour recevoir le signal P' qui, dans ce cas, se réduit au signal $I_a$, la deuxième entrée est reliée à la borne 220 pour recevoir le signal $F_c$ et la troisième entrée est reliée à la sortie d'un inverseur 244 dont l'entrée est connectée à la borne 227 pour recevoir le signal SC' produit par le circuit 208 en réponse au signal $I_a$ appliqué sur ses bornes 201 et 207. La sortie de la porte ET 241 est connectée à l'entrée CL d'un compteur binaire 242. Ce compteur a une entrée de remise a zéro R reliée à la borne 221 pour recevoir le signal $R_a$ et une sortie multiple $a_k$ ($k = 0$ à 5) dont l'état logique détermine un nombre binaire $A = a_5a_4a_3a_2a_1a_0$. Une mémoire 243 reçoit sur une entrée multiple le nombre $A' = a_5a_4a_3a_2a_1a_0$, déduit du nombre A par la suppression du digit le moins significatif $a_0$. De façon évidente le nombre A' est égal à la partie entière de A/2. La mémoire 243 a encore une entrée L, reliée à la borne 223 pour recevoir le signal $I_m$, et une sortie multiple, reliée à une entrée multiple du comparateur 233. En réponse à une impulsion du signal $I_m$ le nombre A' présent à l'entrée est mémorisé et apparaît à la sortie sous la forme $M = m_4m_3m_2m_1m_0$ déjà utilisé.

Le fonctionnement du circuit d'apprentissage 240 de la figure 6 sera maintenant décrit à l'aide du diagramme de la figure 8 et en faisant référence aux figures 2, 3 et 5a.

Le signal $I_a$, représenté sur la figure 8, contient deux impulsions d'apprentissage. La première commence à l'instant $t_4$ ou $t'_i$ pour se terminer à l'instant $t_6$, tandis que la seconde commence à l'instant $t_7$ ou $t''_i$ pour se terminer à l'instant $t_9$, la seconde impulsion suivant la première après un temps $t_7$-$t_6$ de 1 ms par exemple. Les durées $t_6$-$t_4$ et $t_9$-$t_7$ de ces impulsions ont avantage à être égales et valoir entre 2 et 3 ms. Les impulsions d'apprentissage doivent apparaître alors que les signaux P et PC se trouvent au niveau logique bas, par exemple entre deux impulsions motrices du signal P, c'est-à-dire environ 500 ms après l'instant $t_3$. Enfin la périodicité du signal $I_a$ n'est pas critique et peut typiquement être de 64 secondes.

La première impulsion d'apprentissage du signal $I_a$ apparaissant entre les instants $t_4$ et $t_6$, appliquée sur les entrées 201 et 207 du circuit 208 de la figure 3, a pour effet, comme une impulsion motrice normale du signal P débutant à l'instant $t_i$, de faire circuler dans la bobine 16 du moteur un courant, par exemple le courant $I_1$ représenté sur la figure 2. Le transistor 125 (fig. 3) étant alors bloqué, le courant $I_1$ est mesuré par la tension $V_1$ aux bornes de la résistance 124. Tant que la tension $V_1$ est inférieure à la tension de référence $V_R$, le signal à la sortie du comparateur 127, désigné par SC', reste au niveau logique bas. Une fois que $V_1$ a atteint la valeur $V_R$, à l'instant $t_a$ sur la figure 5a ou $t_5$ sur la figure 8, le signal logique SC' passe au niveau logique haut. Entre les instants $t_4$ et $t_5$, le signal et le signal SC', inverse de SC', étant au niveau logique haut, le signal $F_c$ traverse la porte ET 241 de la figure 6 et le compteur 242, préalablement remis à zéro par le

signal $R_a$, compte $A_a$ impulsions de $F_c$ pendant le temps $t_5$-$t_4$ correspondant au temps $t_a$-$t'_i$ de la figure 5a. Entre "les instants $t_5$ et $t_7$ le comptage est arrêté car l'un des signaux $I_a$ ou SC' se trouve au niveau logique bas.

Un cycle similaire va se reproduire avec l'apparition de la seconde impulsion d'apprentissage du signal $I_a$ entre les instants $t_7$ et $t_9$. La seule différence avec le cas précédent est que le courant dans la bobine 16 sera le courant $I_2$ mesuré par la tension $V_2$, au lieu du courant $I_1$. Cette tension atteindra la valeur de référence $V_R$ à l'instant $t_b$ ou $t_8$. Le compteur 242, qui n'a pas été remis à zéro entre-temps, ajoutera au nombre $A_a$, qu'il contient déjà, un nombre $A_b$ correspondant au nombre d'impulsions du signal $F_c$ contenu dans l'intervalle de temps $t_b$-$t''_i$ ou $t_8$-$t_7$.

A l'instant $t_8$ (fig. 8), le compteur 242 (fig. 6) contient ainsi le nombre $A_a + A_b$, égal au nombre $A = a_5a_4a_3a_2a_1a_0$ déjà mentionné. Ce nombre est une mesure de la somme des intervalles de temps $t_a$-$t_i$ et $t_b$-$t_i$. Le nombre $M = m_4m_3m_2m_1m_0$ transféré dans la mémoire 243, étant égal à A/2, est alors une mesure de l'intervalle de temps moyen cherché $1/2 [ (t_a$-$t'_i) + (t_b$-$t''_i) ] = t'_o$-$t_i$, lequel définit l'instant de contrôle $t'_o$.

Afin de mieux adapter le dispositif selon l'invention aux caractéristiques du moteur, il peut être avantageux de comparer le courant de contrôle dans la bobine 16 à un premier courant de référence $I'_R$ et de déterminer les intervalles de temps $t_a$-$t'_i$ et $t_b$-$t''_i$ en utilisant un second courant de référence $I''_R$. Ceci représente une extension par rapport au cas décrit où les deux courants de référence étaient égaux et valaient $I_R$. De même, au lieu de mesurer le courant de contrôle dans la bobine 16 après l'intervalle de temps moyen $t'_o$-$t_i$, il peut être intéressant de faire cette mesure après un intervalle de temps de contrôle déterminé par une fonction arbitraire à partir de la somme des intervalles de temps $t_a$-$t'_i$ et $t_b$-$t''_i$. L'intervalle de temps moyen ne. constitue alors qu'un cas particulier simple.

Ces variantes qui constituent une généralisation du dispositif décrit, ne sortent bien entendu pas du cadre de la présente invention.

## Revendications

1. Procédé de reconnaissance de la position angulaire de repos du rotor d'un moteur pas à pas, ledit moteur comprenant un rotor aimanté présentant deux pôles diamétralement opposés et susceptibles d'occuper deux positions de repos, un stator formant un circuit magnétique pourvu d'étranglements saturables et une bobine couplée magnétiquement au stator pour y créer un champ magnétique, ledit procédé consistant :
- à appliquer à ladite bobine une impulsion électrique de contrôle;
- à mesurer un courant de contrôle, créé dans la bobine par ladite impulsion, à la fin d'un intervalle de temps de contrôle compté à partir du début de ladite impulsion;

- à comparer le courant de contrôle à un premier courant de référence; et

- à déterminer le signe de la comparaison entre les deux courants, ce signe étant représentatif de la position de repos du rotor, caractérisé par le fait que, pour déterminer l'intervalle de temps de contrôle, il consiste en outre :

- à appliquer à la bobine une première impulsion électrique;

- à mesurer un premier courant dans la bobine créé par la première impulsion électrique;

- à déterminer un premier intervalle de temps correspondant à la durée nécessaire au premier courant pour atteindre un second courant de référence;

- à mémoriser le premier intervalle de temps;

- à appliquer à la bobine une seconde impulsion électrique de même amplitude que la première mais de polarité inverse;

- à mesurer un second courant dans la bobine créé par la seconde impulsion électrique;

- à mesurer un second courant dans la bobine créé par la seconde impulsion électrique;

- à déterminer un second intervalle de temps correspondant à la durée nécessaire au second courant pour atteindre le second courant de référence;

- à ajouter le second intervalle de temps au premier; et

- à déterminer l'intervalle de temps de contrôle en fonction de la somme desdits premier et second intervalles.

2. Procédé selon la revendication 1, caractérisé en ce que le premier et le second courant de référence sont égaux.

3. Procédé selon la revendication 1 ou 2, caractérisé en ce que l'intervalle de temps de contrôle est égal à la valeur moyenne du premier et du second intervalle de temps.

4. Dispositif de reconnaissance de la position angulaire du rotor d'un moteur pas à pas pour la mise en oeuvre du procédé selon la revendication 1, comprenant :

- des moyens pour produire une impulsion électrique de contrôle;

- des moyens pour appliquer ladite impulsion à la bobine du moteur;

- des moyens pour mesurer un courant de contrôle, créé dans la bobine par ladite impulsion, à la fin d'un intervalle de temps de contrôle compté à partir du début de ladite impulsion;

- des moyens de mémorisation pour stocker ledit intervalle de temps de contrôle; et

- des moyens pour comparer le courant de contrôle à un premier courant de référence et fournir un signal représentatif du signe de la comparaison, ledit signe indiquant la position angulaire du rotor, caractérisé en ce qu'il comporte en outre :

- des moyens pour produire une première impulsion électrique;

- des moyens pour appliquer cette première impulsion à la bobine du moteur;

- des moyens pour mesurer un premier courant dans la bobine, créé par ladite première impulsion;

- des moyens pour déterminer un premier intervalle de temps correspondant à la durée nécessaire au premier courant pour atteindre un second courant de référence;

- des moyens pour produire une seconde impulsion électrique de même amplitude que la première mais de polarité inverse;

- des moyens pour mesurer un second courant dans la bobine, créé par ladite seconde impulsion;

- des moyens pour déterminer un second intervalle de temps correspondant à la durée nécessaire au second courant pour atteindre le second courant de référence;

- des moyens pour ajouter le second intervalle de temps au premier; et

- des moyens pour calculer la valeur moyenne de ces deux intervalles de temps et transférer cette valeur moyenne dans lesdits moyens de mémorisation, ladite valeur constituant l'intervalle de temps de contrôle.

**Patentansprüche**

1. Verfahren zur Erkennung der Winkelruhestellung des Rotors eines Schrittmotors, wobei der genannte Motor einen magnetisierten Rotor mit zwei diametral gegenüberliegenden Polen umfasst, die zwei Ruhestellungen belegen können, einen einen magnetischen, mit sättigbaren Drosseln versehenen Kreis bildenden Stator und eine zur Erzeugung eines Magnetfeldes im Stator magnetisch mit diesem gekoppelte Wicklung, wobei das genannte Verfahren darin besteht:

- an die genannte Wicklung einen elektrischen Kontrollimpuls anzulegen;

- einen in der Wicklung durch den genannten Impuls erzeugten Kontrollstrom zu messen, und zwar am Ende eines Kontrollzeitabstands, der bei Erscheinen des genannten Impulses beginnt;

- den Kontrollstrom mit einem ersten Referenzstrom zu vergleichen; und

- das für die Ruhestellung des Rotors typische Vorzeichen des Vergleichs zwischen den beiden Strömen zu bestimmen, dadurch gekennzeichnet, dass es zur Bestimmung des Kontrollzeitabstands ferner darin besteht:

- an die Wicklung einen ersten elektrischen Impuls anzulegen;

- einen ersten in der Wicklung durch den ersten elektrischen Impuls erzeugten Strom zu messen;

- einen ersten Zeitabstand zu bestimmen, der der Dauer entspricht, nach der der erste Strom einen zweiten Referenzstrom erreicht;

- den ersten Zeitabstand zu speichern;

- an die Wicklung einen zweiten elektrischen Impuls anzulegen, von gleicher Amplitude wie der erste, aber von umgekehrter Polarität;

- einen zweiten, in der Wicklung durch den zweiten elektrischen Impuls erzeugten Strom zu messen;

- einen zweiten Zeitabstand zu bestimmen, der der Dauer entspricht, nach der der zweite Strom den zweiten Referenzstrom erreicht;

- den zweiten Zeitabstand dem ersten hinzuzufügen; und

- den Kontrollzeitabstand in Funktion der Summe des genannten ersten und des genannten zweiten Zeitabstands zu bestimmen.

2. Verfahren gemäss Anspruch 1, dadurch gekennzeichnet, das der erste und der zweite Referenzstrom gleich sind.

3. Verfahren gemäss Anspruch 1 oder 2, dadurch gekennzeichnet, dass der Kontrollzeitabstand gleich dem Mittelwert des ersten und des zweiten Zeitabstands ist.

4. Vorrichtung zur Erkennung der Winkelstellung des Rotors eines Schrittmotors für die Durchführung des Verfahrens gemäss Anspruch 1, umfassend:

- Mittel zur Erzeugung eines elektrischen Kontrollimpulses;

- Mittel, um den genannten Impuls an die Wicklung des Motors anzulegen;

- Mittel zur Messung eines in der Wicklung durch den genannten Impuls erzeugten Kontrollstroms, und zwar am Ende eines Kontrollzeitabstands, der bei Erscheinen des genannten Impulses beginnt;

- Mittel zur Speicherung des genannten Kontrollzeitabstands; und

- Mittel zum Vergleich des Kontrollstroms mit einem ersten Referenzstrom und zur Lieferung eines dem Vorzeichen des Vergleichs entsprechenden Signals, wobei das genannte Vorzeichen die Winkelstellung des Rotors angibt, dadurch gekennzeichnet, dass er ferner umfasst:

- Mittel zur Erzeugung eines ersten elektrischen Impulses;

- Mittel, um diesen ersten Impuls an die Wicklung des Motors anzulegen;

- Mittel zur Messung eines ersten durch den genannten ersten Impuls in der Wicklung erzeugten Stroms;

- Mittel zur Bestimmung eines ersten Zeitabstands, der der Dauer entspricht, nach der der erste Strom einen zweiten Referenzstrom erreicht;

- Mittel zur Erzeugung eines zweiten elektrischen Impulses von gleicher Amplitude wie der erste, aber von umgekehrter Polarität;

- Mittel zur Messung eines zweiten in der Wicklung durch den genannten zweiten Impuls erzeugten Stroms;

- Mittel zur Bestimmung eines zweiten Zeitabstands, der der Dauer entspricht, nach der der zweite Strom den zweiten Referenzstrom erreicht;

- Mittel, um den zweiten Zeitabstand dem ersten hinzuzufügen; und

- Mittel zur Berechnung des Mittelwerts dieser beiden Zeitabstände und zur Überführung dieses Mittelwerts in die genannten Speichermittel, wobei der genannte Wert den Kontrollzeitabstand darstellt.


**Claims**

1. A method of recognizing the angular rest position of the rotor of a stepping motor, said motor comprising a magnetized rotor having a pair of diametrically opposite poles able to take up two positions of rest, a stator forming a magnetic circuit provided with saturable constrictions and a coil magnetically coupled to the stator to set up therein a magnetic field, said method comprising:

- applying to said coil an electric control pulse;

- measuring a control pulse, created in the coil by said pulse, at the end of a control time period reckoned from the start of said pulse ;

- comparing the control current with a first reference current; and

- determining the sign of the comparison between the currents, said sign being representative of the rotor's rest position :

characterized in that, in order to determine the control time period, it further comprises:

- applying to the coil a first electric pulse;

- measuring a first current in the coil, created by the first electric pulse ;

- determining a first period of time corresponding to the time needed by the first current to reach a second reference current ;

- memorizing the first time period;

- applying to the coil a second electric pulse having the same amplitude as the first but of opposite polarity;

- measuring a second current in the coil, created by the second electric pulse;

- determining a second period of time corresponding to the time needed by the second current to reach the second reference current ;

- adding the second time period to the first; and

- determining the control time period in dependence on the sum of said first and second periods.

2. A method according to claim 1, characterized in that the first and second reference currents are equal.

3. A method according to claim 1 or 2, characterized in that the control time period is equal to the mean value of the first and second time periods.

4. A device able to recognize the angular position of the rotor of a stepping motor, for carrying out the method according to claim 1, comprising:

- means for producing an electric control pulse;

- means for applying said pulse to the motor's coil;

-means for measuring a control current, created in the coil by said pulse, at the end of a control time period reckoned from the start of said pulse ;
- memorization means for storing said control time period; and
- means for comparing the control current with a first reference current and for supplying a signal that is representative of the sign of the comparison, said sign indicating the angular position of the rotor; characterized in that it further comprises :
- means for producing a first electric pulse;
- means for applying said first pulse to the motor's coil;
- means for measuring a first current in the coil, created by said first pulse ;
- means for determining a first time period corresponding to the time needed by the first current to reach a second reference current;
- means for producing a second electric pulse having the same amplitude as the first but of opposite polarity ;
- means for measuring a second current in the coil, created by said second pulse ;
- means for determining a second time period corresponding to the time needed by the second current to reach the second reference current ;
- means for adding the second time period to the first; and
- means for calculating the mean value of these two time periods and for transferring this mean value into said memorization means, said value constituting the control time period.

**Fig.1**

**Fig.4**

0 171 635

Fig. 2

Fig. 3

3

Fig.5

0 171 635

Fig. 6

0 171 635

Fig. 7

Fig. 8

9

Fig.5a